# EUROPEAN PATENT SPECIFICATION

(11) **EP 2 283 982 B1**
(45) Date of publication and mention of the grant of the patent: **19.09.2012**
(21) Application number: 09382143.7
(22) Date of filing: 12.08.2009
(51) Int. Cl.: B25J 15/00, B65B 5/06, B65B 5/10, B65B 35/52

(54) **Robotised system for filling boxes**
Automatiksystem zum Füllen von Boxen
Système robotisé pour remplir des boîtes

(43) Date of publication of application: 16.02.2011
(73) Proprietor: Simaupro Galicia, S.L., 36418 Mos (Pontevedra) (ES)
(72) Inventor: Gonzalez Lopez, Ramon, 36418 Mos (Pontevedra) (ES); Velasco Toepfer, Francisco, 36418 Mos (Pontevedra) (ES); Lis Caldas, Nuria, 36418 Mos (Pontevedra) (ES); Veiga Torrado, Pablo, 36418 Mos (Pontevedra) (ES); Fernandez Salgado, Jorge, 36418 Mos (Pontevedra) (ES); Fernandez Garcia, Maria del Carmen, 36418 Mos (Pontevedra) (ES); Gonzalez Rodriguez, Santiago Jorge, 36418 Mos (Pontevedra) (ES); Dominguez Alvarez, Jose Manuel, 36418 Mos (Pontevedra) (ES)
(74) Representative: Temino Ceniceros, Ignacio

(56) References cited:
- WO-A1-01/26971
- FR-A1- 2 866 001
- JP-A- 2004 268 976
- JP-A- 2005 059 918
- US-A- 4 492 070

## Description

This invention relates to a robotised system configured to the filling of boxes in order to introduce a set of cases in the cardboard boxes that form their final packaging. The present invention is included in the field of the robotised system used in packing.

### Description of Prior Art

At present, the filling of boxes with cases is made by hand or by means of automatic systems that introduce part or the whole of the cases by pushing them into the box, which remains motionless, with electro-pneumatic drives, while the inventors with expertise in the subject do not know any other automatised or robotised system which allows filling the cases avoiding the problems arising from the manual labor or from the said automatic systems that make the case-reference change difficult.

From the state of the art it is known the document JP 2004268976 which describes a robot for filling boxes. A plurality of articles are conveyed by an article conveyor and stacked repeatedly, and the article is gripped by a robot and refilled in the case by repeating a plurality of times. The case is kept in a slanting state for filling the articles so as to keep the articles previously filled in a stable posture. One corner of the bottom face is slanted to be the lowest position with a slanting means equipped with a lifting means and a rotating means. Since the articles can be rested on the two side walls adjacent to the lowest corner, the articles can be filled in the case corresponding to a different casing pattern.

### Explanation of the invention

As a solution to the technical problem arising from the lack of automatisation in the filling of boxes with cases, and from the expensive reference changes in the current automatic systems, the system to fill boxes for cases in disclosed, comprising essentially a robotised arm with an element to fit the cases, or cell, which is steadily joined to the end of the robotised arm, or hand, and said cell consisting of an essentially rectangular body open on two of its sides, wherein the cases can be introduced into one of the sides, while the other side can be introduced into a box for receiving said cases, and wherein the cell comprises a case buffer at each one of its right and left sides, as well as a drive to prevent the distortion of the box when filled.

Through the so described system, and due to the positioning of the system at the end of the conveyor belt, the cases get into the cell until it is filled up and, once the cell is full, a simple turn of the robot wrist causes the cases to fall into the box, so that the latter gets filled without any human action.

Throughout the description and the claims, the word 'comprises' and its inflections are not intended to exclude other technical characteristics, aditives, components or steps. For the experts in the subject, other objects, advantages and characteristics of the invention shall sometimes be deduced from the description. practice of the invention. The next examples and drawings are supplied as an illustration and are not intended to be of limitation for the present invention.

### Brief description of the figures

FIG. 1 displays an overview of the robotised system to fill boxes for cases, object of this invention, with cases.
FIG. 2 displays a detail view of the cell, which configures the system object of this invention along with the robotised arm.

### Preferent embodiment of the invention

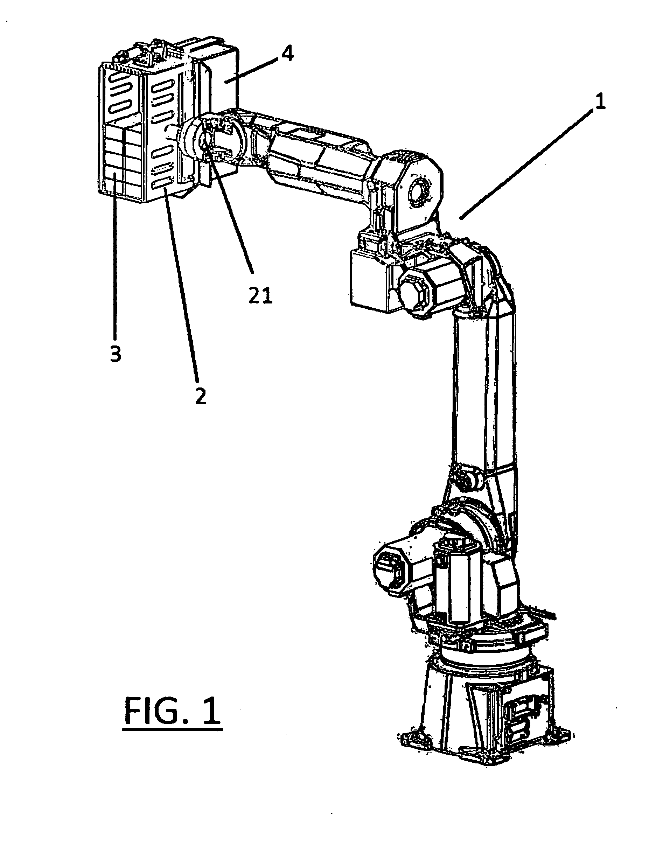

As shown in FIG 1, the robotised system object of the present invention comprises at least one robotised arm (1) and an element to fit the cases, or cell (2), steadily joined to the robotised arm (1) at its end, or hand, by means of the support of the robot wrist (21), that is placed at one of the cell sides.

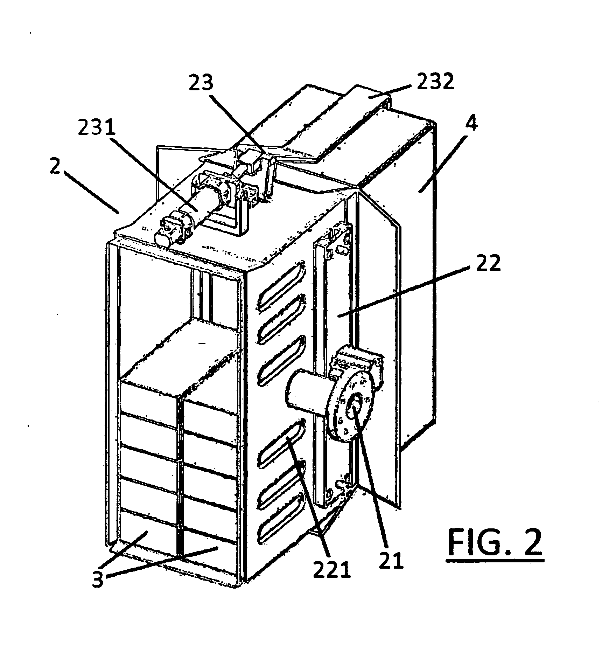

In FIG. 2 can be seen the cell (2) as an essentially rectangular element that is open in two of its sides, wherein the cases (3) are introduced through one of them - that will be named the front side - and the other one - that will be named the back side - is suitable to be introduced into the box (4) receiving said cases (3). Likewise, the cell (2) comprises one buffer (22) at both sides right and left, which can be pneumatically driven, as well as a drive (23) to prevent the distortion of the box (4) when filled and to retain it or keep it joined to the cell, and wherein said drive (23) comprises in turn a pneumatic piston (231) and a flap or clasp (232) that retains the box (4) externally from the side corresponding to the bottom of the box.

In the common functioning of the system, the feeding of the cases (3) takes place by means of a conveyor belt, not shown in the figures attached, whereas the cases (3) are conveniently placed on the said belt through the guide bars arranged at both sides of it, so that in the ordinary movement of the belt the guide bars compel the cases (3) to the right position on the conveyor belt and direct them towards the cell (2), placed at the end of the conveyor belt.

The cell (2) is dimensioned proportionally to the box (4) in which it is going to be introduced, in such a way that it can be partially inserted into the box (4), immobilizing it. By the other hand, as described above, the cases (3) get into the cell due to the movement of the conveyor belt and to their position on it, and fill the cell row by row.

In order to start a new row of cases (3) in the cell, a detector (221) arranged in the cell (2) or between the cell (2) and the end of the conveyor belt detects that the row is complete or that all the cases forming each row have already been introduced; then the robotised arm (1) drives slightly the cell (2) back and moves it down along the precise measure of the case (3), so that the next row can be placed on top of the previous one inside the cell (2).

When the cell (2) is full, the longitudinal buffers (22) arranged on both sides left and right of the cell (2), which are configured to fix the position of the cases (3) inside the cell (2), get unblocked, and, with a turning move of the robot hand (1) that is transmitted to the cell (2) by the support of the wrist (21), the set of cases (3) is dumped into the box (4) fitted on the cell.

The robotised arm (1) moves to a precise position and introduces the cell (2) into the box (4) with the drive (23) open. The pneumatic piston (231) is driven to retain the box and, again, the robotised arm (1) moves to place the cell (2) in front of a conveyor belt and to start a new filling cycle.

## Claims

1. A robotised system to fill boxes with cases comprising a robotised arm with a cell (2) to fit the cases steadily joined to the end of the robotised arm (1), or to its hand, **characterized in that**
the cell (2) consists of an essentially rectangular body open on two of its sides, wherein the cases can be introduced into one of the sides, while the other side can be introduced into a box (4) for receiving said cases (3);
and wherein the cell (2) comprises at least one buffer (22) at each one of its right and left sides for fixing the position of the cases inside the cell, as well as a drive (23) to prevent the distortion of the box (4) when filled.

2. The robotised system as defined in claim 1, **characterized in that** the joint between the robotised arm (1) and the cell (2) comprises a support of the robot wrist (21) arranged on one of the sides of the cell (2).

3. The robotised system as defined in claim 1 and 2, **characterized in that** the buffers (22) are driven.

4. The robotised system as defined in the previous claims, **characterized in that** the drive (23) comprises itself a pneumatic piston (231) and a flap or clasp (232) that retains the box (4) externally from the side corresponding to the bottom of the box.

5. The robotised system as defined in the previous claims, **characterized in that** the feeding of the cases (3) takes place by means of a conveyor belt, whereas the cases (3) are conveniently placed on the said belt through guide bars arranged at both sides of it, so that in the ordinary movement of the belt the guide bars compel the cases (3) to the right position on the conveyor belt and direct them towards the cell (2), placed at the end of the conveyor belt.

6. The robotised system as defined in the previous claims, **characterized in that** the cell (2) is dimensioned proportionally to the box (4) in which it is going to be introduced, in such a way that it can be inserted into the box (4), at least partially, immobilizing it.

7. Method for filling a box by means of the robotised system of claim 1, wherein it comprises at least a step of introducing the cases (3) into the cell (2) row by row; and when a detector (221) arranged in the cell (2) detects that a row is complete, then driving slightly the cell (2) back by means of the robotised arm (1) and moving it down along the precise measure of a case (3), so that the next row can be placed on top of the previous one inside the cell (2).

8. The robotised method as defined in the claim 7, **characterized in that**, when the cell (2) is full, the longitudinal buffers (22) arranged on both sides left and right of the cell (2), which are configured to fix the position of the cases (3) inside the cell (2), get unblocked, and, with a turning move of the robot hand that is transmitted to the cell (2) by the support of the wrist (21) of the robotised arm (1), the set of cases (3) is dumped into a box (4) fitted on the cell.

## Patentansprüche

1. Robotersystem zum Füllen von Kisten mit Schachteln, umfassend einen Roboterarm mit einer Zelle (2), um die fest mit dem Ende des Roboterarms oder mit dessen Hand verbundenen Schachteln einzupassen, **dadurch gekennzeichnet, dass**
die Zelle (2) aus einem im wesentlichen rechteckigen Körper bestehen, der an zwei Seiten offen ist, in den die Schachteln auf einer Seite eingebracht werden können, während die andere Seite in eine Kiste (4) eingeführt werden kann, um die Schachteln (3) entgegenzunehmen;
wobei die Zelle (2) zumindest einen Anschlag (22) auf der rechten und der linken Seite hat, um die Position der Schachteln im Inneren der Zelle festzulegen, sowie einen Antrieb (23), um eine Verformung der Kiste (4) beim Füllen zu vermeiden.

2. Robotersystem nach Anspruch 1, **dadurch gekennzeichnet, dass** die Verbindung zwischen dem Roboterarm (1) und der Zelle (2) eine Stütze des Roboterhandgelenks (21) umfasst, die auf einer der Seiten der Zelle (2) angeordnet ist.

3. Robotersystem nach den Ansprüchen 1 und 2, **dadurch gekennzeichnet, dass** die Anschläge (22) angetrieben sind.

4. Robotersystem nach den vorhergehenden Ansprüchen, **dadurch gekennzeichnet, dass** der Antrieb (23) einen druckluftbetätigten Kolben (231) und eine Rippe oder Klammer (232) aufweist, die die Kiste (4) von außen umfasst, von der Seite aus, die dem unteren Teil der Kiste entspricht.

5. Robotersystem nach den vorhergehenden Ansprüchen, **dadurch gekennzeichnet, dass** die Zuführung der Schachteln (3) mit Hilfe eines Transportbands stattfindet, wobei die Schachteln (3) ordnungsgemäß auf diesem Band aufgelegt werden, mit Hilfe von an beiden Seiten dieses Bands angeordneten Führungsstangen, damit diese Führungsstangen die Schachteln (3) bei der gewöhnlichen Bewegung des Bands in die richtige Position auf dem Transportband zwingen und diese zur Zelle (2) ausrichten, die sich am Ende des Transportbands befindet.

6. Robotersystem nach den vorhergehenden Ansprüchen, **dadurch gekennzeichnet, dass** die Abmessungen der Zelle (2) proportional zur Kiste (4) in die sie eingebracht wird, ausgelegt werden, so dass diese, wenn sie arretiert wird, zumindest teilweise in die Kiste (4) eingebracht werden kann.

7. Verfahren zum Füllen einer Kiste mit Hilfe eines Robotersystems nach Anspruch 1, das zumindest einen Schritt für das reihenweise Einbringen der Schachteln (3) in die Zelle (2) umfasst; und wenn ein in der Zelle (2) angeordneter Detektor (221) erfasst, dass die Reihe voll ist, so führt der Roboterarm (1) die Zelle (2) leicht zurück und bewegt sie nach unten, über eine Strecke, die genau der Abmessung einer Schachtel (3) entspricht, damit die nächste Reihe über der vorhergehenden im Inneren der Zelle (2) angeordnet werden kann.

8. Robotisiertes Verfahren nach Anspruch 7, **dadurch gekennzeichnet, dass**, wenn die Zelle (2) voll ist, die Längsanschläge (22), die auf der linken und der rechten Seite der Zelle (2) angeordnet sind, die so ausgeführt sind, dass sie die Position der Schachteln (3) im Inneren der Zelle (2) festlegen, entriegelt werden, und dass mit einer Drehbewegung der Roboterhand, die über die Stütze des Handgelenks (21) des Roboterarms (1) auf die Zelle (2) übertragen wird, die gesamten Schachteln (3) in eine auf die Zelle aufgesetzte Kiste (4) entleert werden.

## Revendications

1. Système robotisé de remplissage de caissons avec des caisses doté d'un bras robotisé avec une cellule (2) pour ajuster les caisses unies entre elles de façon fixe à l'extrémité du bras robotisé, ou à sa main, **caractérisé en ce que**
la cellule (2) consiste en un corps ouvert rectangulaire dans deux de ses côtés, dans lequel les caisses peuvent être introduites dans l'un des deux côtés tandis que l'autre côté peut être introduit dans un caisson (4) pour recevoir ces caisses (3);
dans lequel la cellule (2) comprend au moins une butée (22) sur chaque côté droit et gauche pour fixer la position des caisses à l'intérieur de la cellule, ainsi qu'un mécanisme d'impulsion (23) pour éviter la distorsion de la caisse (4) lorsqu'elle est remplie.

2. Système robotisé détaillé dans la revendication 1, **caractérisé en ce que** l'union entre le bras robotisé (1) et la cellule (2) comprend un support de la poignée du robot (21) agencé dans l'un des côtés de la cellule (2).

3. Système robotisé détaillé dans les revendications 1 et 2 **caractérisé en ce que** les butées (22) sont impulsées.

4. Système robotisé détaillé dans les revendications précédentes, **caractérisé en ce que** le mécanisme d'impulsion (23) comprend un piston pneumatique (231) et une ailette ou collier (232) qui retiennent le caisson (4) à l'extérieur depuis le côté correspondant à la partie inférieure du caisson.

5. Système robotisé défini dans les revendications précédentes, **caractérisé en ce que** la fourniture de caisses (3) a lieu au moyen d'une bande transporteuse, alors que les caisses (3) sont placées convenablement sur cette bande à travers des tiges de guidage placées des deux côtés de celle-ci, pour que lors du mouvement habituel de la bande, les tiges de guidage obligent les caisses (3) à se situer dans une position correcte sur la bande transporteuse et les dirigent vers la cellule (2) placée à l'extrémité de la bande transporteuse.

6. Système robotisé détaillé dans les revendications précédentes, **caractérisé en ce que** la cellule (2) est dimensionnée proportionnellement au caisson (4) dans lequel elle sera introduite, de façon à ce que qu'elle puisse être insérée dans le caisson (4), tout au moins partiellement, et être immobilisée.

7. Processus de remplissage d'un caisson au moyen d'un système robotisé détaillé dans le revendication 1, qui comprend au moins une phase d'introduction des caisses (3) dans la cellule (2) file à file; et lorsqu'un détecteur (221) placé dans la cellule (2) détecte qu'une file est complète, le bras robotisé (1) conduit légèrement la cellule (2) de retour grâce au bras robotisé (1) et la déplace vers le bas tout au long de la mesure précise d'une caisse (3), pour que la file suivante puisse être placée dans la partie supérieure de la caisse suivante à l'intérieur de la cellule (2).

8. Processus robotisé détaillé dans la revendication 7, **caractérisé en ce que**, lorsque la cellule (2) est remplie, les butées longitudinales (22) placées sur le côté gauche et droit de la cellule (2), configurées pour fixer la position des caisses (3) à l'intérieur de la cellule (2), se débloquent et grâce à un mouvement de la main du robot qui se transmet à la cellule (2) à travers le support de la poignée (21) du bras robotisé (1), l'ensemble des caisses (3) est renversé dans un caisson (4) monté dans la cellule.
